(19) **Europäisches Patentamt**
**European Patent Office**
**Office européen des brevets**

(11) **EP 1 910 117 B1**

(12) **FASCICULE DE BREVET EUROPEEN**

(45) Date de publication et mention
de la délivrance du brevet:
**01.09.2010 Bulletin 2010/35**

(51) Int Cl.:
**B60K 6/00** *(2007.10)* **B60T 1/06** *(2006.01)*
**F16H 3/72** *(2006.01)*

(21) Numéro de dépôt: **06743847.3**

(22) Date de dépôt: **26.04.2006**

(86) Numéro de dépôt international:
**PCT/FR2006/050390**

(87) Numéro de publication internationale:
**WO 2006/117492 (09.11.2006 Gazette 2006/45)**

(54) **PROCEDE DE BLOCAGE DE ROUES D'UN VEHICULE HYBRIDE A L'ARRET ET DISPOSITIF DE TRANSMISSION ASSOCIE**

VERFAHREN ZUM BLOCKIEREN VON RÄDERN EINES HYBRIDFAHRZEUGS BEIM ANHALTEN UND ZUGEHÖRIGE GETRIEBEVORRICHTUNG

METHOD FOR BLOCKING WHEELS OF A HYBRID VEHICLE WHEN STOPPED AND ASSOCIATED TRANSMISSION DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.05.2005 FR 0551148**

(43) Date de publication de la demande:
**16.04.2008 Bulletin 2008/16**

(73) Titulaire: **PEUGEOT CITROËN AUTOMOBILES S.A.**
**78140 Vélizy Villacoublay (FR)**

(72) Inventeurs:
• **BELMONT, Serge**
**F-92100 Boulogne (FR)**
• **BOURY, Olivier**
**F-92000 Nanterre (FR)**
• **BESNARD, Sébastien**
**F-92330 Sceaux (FR)**

(56) Documents cités:
| | |
|---|---|
| **EP-A- 0 552 140** | **EP-A- 0 769 403** |
| **EP-A- 1 164 043** | **EP-A- 1 281 557** |
| **DE-A- 10 116 989** | **US-A1- 2004 058 769** |

**Description**

La présente invention concerne un procédé de blocage de roues d'un véhicule hybride à l'arrêt et un dispositif de transmission qui lui est associé. L'invention a notamment pour but d'assurer un blocage sûr des roues du véhicule hybride, en mettant en oeuvre des éléments qui modifient le moins possible l'architecture du dispositif de transmission. L'invention trouve une application particulièrement avantageuse dans le domaine des véhicules automobiles à motorisation hybride, mais elle pourrait aussi être utilisée avec d'autres types de véhicules terrestres à motorisation hybride.

On connaît des dispositifs de transmission pour véhicules hybrides qui comportent un moteur thermique, deux machines électriques, et un, deux, ou plusieurs trains épicycloïdaux reliés entre eux à l'intérieur d'un ensemble mécanique. Un exemple d'un tel dispositif est décrit dans la demande de brevet français FR-A-2832357. Avec de tels dispositifs de transmission, la puissance du moteur thermique peut être soit transmise directement aux roues, soit dérivée en passant par une chaîne électrique.

La chaîne électrique relie les machines électriques susceptibles de se comporter en moteur ou en générateur selon des valeurs d'énergies reçues électriquement et / ou mécaniquement respectivement sur leurs bornes et leur arbre. La puissance dérivée est retransmise aux roues du véhicule ou stockée, le cas échéant, dans un système de stockage. Cette puissance dérivée permet d'adapter précisément le couple appliqué aux roues du véhicule à celui demandé par un conducteur, tout en adaptant également précisément les couple et régime du moteur thermique de façon à optimiser son rendement.

En outre, la chaîne électrique comporte notamment un premier onduleur, un deuxième onduleur, ainsi qu'un bus électrique.

Lorsqu'une des machines se comporte en générateur, les signaux de tension alternatifs observables entre ses phases sont transformés en un signal de tension continue observable sur le bus, par l'onduleur associé à cette machine. Lorsqu'une des machines se comporte en moteur, le signal de tension continue observable sur le bus est transformé en signaux de tension alternatifs et déphasés par l'onduleur associé à cette machine. Ces signaux de tension sont appliqués sur les phases de la machine qui fonctionne en moteur.

Dans le cas où aucun système de stockage n'est relié au bus, l'énergie produite par une des machines est automatiquement consommée par l'autre machine. En variante, un système de stockage, tel qu'une batterie ou un supercondensateur, est relié au bus. Les deux machines peuvent alors fonctionner simultanément en générateur ou en moteur.

Un tel dispositif de transmission doit pouvoir être bloqué en rotation lorsque le véhicule se trouve à l'arrêt et garé. Ce dispositif doit ainsi pouvoir prendre une position, dite de frein de parking, dans laquelle les roues du véhicule sont immobiles.

Les dispositifs de transmission connus, notamment du document EP 1 164 043 A, utilisent le même système de frein de parking que sur les boites de vitesses automatiques. Ce système de frein comporte un doigt actionné manuellement via un câble ou à l'aide d'un actionneur spécifique. Ce doigt est destiné à s'engager dans une roue crantée qui est implantée soit directement à l'intérieur d'un pont, soit sur un arbre relié directement à ce pont. Ce pont forme un réducteur constant formé d'un ou plusieurs engrenages et est relié directement aux roues. Donc, en bloquant en rotation un des engrenages du pont, on bloque en rotation les roues du véhicule.

Toutefois, l'implantation du système de frein sur l'arbre relié directement au pont met en jeu des couples importants. En effet, le système est disposé entre l'ensemble mécanique et le pont du véhicule. En conséquence, le système doit être dimensionné pour un couple égal au couple observable à la roue divisé par un rapport de démultiplication entre le pont et une sortie de l'ensemble mécanique.

En outre, ce système de frein est un élément rapporté de la transmission qui nécessite d'être intégré dans ce dispositif. Ce système doit donc être actionné de manière spécifique et indépendante du dispositif de transmission. Cet actionnement se fait soit manuellement par un câble, soit par un actionneur. En outre, un système de frein peut poser des problèmes d'engagement si le doigt se trouve en face d'une dent au moment de l'actionnement. Et ce système peut poser des problèmes de dimensionnement car il faut prévoir les cas où le désengagement du doigt se produit alors que le véhicule se trouve en pente.

EP 1281557 A décrit un procédé de blocage des roues d'un véhicule hybride à l'arrêt par actionnement de deux embrayages de l'ensemble mécanique.

L'invention se propose notamment de limiter les couples qui sont appliqués au système de frein et d'intégrer ce système de frein à l'intérieur du dispositif de transmission.

A cet effet, dans l'invention, pour bloquer les roues du véhicule lorsqu'il est à l'arrêt, on bloque un élément en amont de l'ensemble mécanique. Plus précisément, dans l'invention, on bloque l'arbre de roues par l'intermédiaire de l'ensemble mécanique.

Ainsi, dans une première mise en oeuvre de l'invention, on bloque un élément de l'ensemble mécanique qui est lié en rotation à la roue. Les couples mis en jeux sont alors réduits de la démultiplication entre le pont et une sortie de l'ensemble mécanique, et d'une démultiplication intermédiaire entre une sortie de l'ensemble mécanique et un arbre du dispositif de transmission. La réduction des couples mis en jeu permet de limiter la taille des éléments du système de frein et donc de rendre le dispositif de transmission plus compact que celui de l'état de la technique. En outre, les éléments du système de frein seront faciles à déplacer le long de l'arbre sur lequel ils sont montés.

Dans la pratique, on accroche à l'arbre d'une des machines l'élément de l'ensemble relié à l'arbre de roues, à l'aide d'un premier crabot. Et on relie cet arbre à un élément immobile, tel qu'un bâti de l'ensemble mécanique, à l'aide d'un deuxième crabot. L'utilisation de crabots pour bloquer les roues est économique dans la mesure où certains des crabots utilisés pour bloquer des roues du système sont déjà utilisés pour des changements de mode du dispositif de transmission.

Par rapport à la roue crantée, ces crabots sont plus faciles à implanter dans le dispositif et plus faciles à actionner. En outre, avec un crabot, les problèmes d'engagement ou d'extraction en pente peuvent facilement être résolus en faisant tourner légèrement l'arbre d'une source de puissance. Des dents des crabots pourront ainsi entrer facilement en coopération avec des saillies de pignons.

Dans une deuxième et une troisième mise en oeuvre de l'invention, ce sont les degrés de liberté de l'ensemble mécanique qui sont supprimés afin de bloquer l'arbre de roues. Un degré de liberté est défini comme étant une aptitude de l'ensemble mécanique dans laquelle les régimes des éléments de cet ensemble ne sont pas dépendants les uns des autres

Plus précisément, on a vu que l'ensemble mécanique était formé d'un ou plusieurs trains épicycloïdaux. Chaque train comporte trois éléments: un planétaire, un porte-satellites et une couronne. Chaque train comporte deux degrés de liberté puisque le régime d'un élément du train peut toujours s'exprimer en fonction du régime d'entrée et de sortie. Ainsi, les régimes des éléments d'un train épicycloïdal sont régis par l'équation (1) suivante appelée formule de Willis:

$$(1) \quad RP + K1.RC + K2.RPS = 0$$

RP correspond au régime du planétaire, RC correspond au régime de la couronne et RPS correspond au régime du porte-satellites. K1 et K2 sont des constantes.

Si on relie par exemple entre eux le planétaire et la couronne, on impose une deuxième condition, à savoir

$$(2) \quad RP = K3.RC$$

Cette équation (2) traduit le fait que le régime RP du planétaire est proportionnel au régime RC de la couronne.

Si on relie entre eux le planétaire et le porte-satellites, on impose une troisième condition, à savoir :

$$(3) \quad RP = K4.RPS$$

Cette équation (3) traduit le fait que le régime RP du planétaire est proportionnel au régime RPS du porte-satellites.

En combinant (1), (2) et (3), on obtient

$$(4) \quad RP * (1 + K1/K3 + K2/K4) = 0$$

En conséquence, d'après (4), en ajoutant deux conditions supplémentaires sur les vitesses des éléments du train épicycloïdal, c'est à dire en supprimant les deux degrés de liberté de ce train, on obtient un régime nul pour les 3 éléments. Ainsi, en supprimant les deux degrés de liberté du train, on a bloqué l'arbre de roues qui lui est relié. On obtient ainsi une position de frein de parking pour le système.

Une troisième mise en oeuvre correspond en fait à une variante de la deuxième mise en oeuvre. Dans cette mise en oeuvre, au lieu de relier deux éléments entre eux pour supprimer un des degrés de liberté, on accroche un des éléments du train à un élément fixe, tel qu'un bâti.

Ainsi, pour supprimer un premier degré de liberté, on bloque en rotation un des éléments du train ou plus exactement un arbre auquel il est relié. Si on bloque le porte-satellites on obtient alors :

$$(2') \quad RPS = 0$$

Et pour supprimer le deuxième degré de liberté, on lie les deux autres éléments du train épicycloïdal entre eux, soient le planétaire et la couronne. On obtient alors :

$$(3') \quad RP = K3.RC$$

En combinant (1), (2') et (3'), on obtient :

$$(4') \quad RP*(1+K1/K3+0)=0$$

En conséquence, là encore on obtient un frein de parking. En effet, les régimes des différents éléments composant l'ensemble mécanique sont nuls. Donc l'arbre de roues qui est relié à cet ensemble mécanique possède aussi un régime nul.

En variante, on pourrait relier deux éléments différents du train au bâti pour supprimer les deux degrés de liberté du train.

Dans la pratique, l'ensemble mécanique est formé par deux trains épicycloïdaux liés ente eux de manière à présenter quatre éléments de liaison ou éventuellement cinq. Un élément de liaison est un élément auquel on est susceptible de relier un arbre du dispositif de transmission, tel que l'arbre du moteur, l'arbré des machines ou l'arbre de roues. Toutefois, ces trains sont toujours reliés entre eux de manière à présenter deux degrés de liberté. En conséquence, comme pour un train épicycloïdal simple, il y a seulement deux degrés à supprimer pour immobiliser l'ensemble mécanique. Autrement dit, en imposant deux conditions sur les vitesses des éléments de l'ensemble mécanique formé de plusieurs trains, on peut immobiliser cet ensemble mécanique et donc l'arbre de roues qui lui est relié.

L'invention concerne donc un procédé de blocage de roues d'un véhicule à l'arrêt conforme à l'objet de la revendication 1.

L'invention sera mieux comprise à la lecture de la description qui suit et à l'examen des figures qui l'accompagnent. Ces figures sont données à titre illustratif mais nullement limitatif de l'invention. Ces figures montrent :

- figure 1 : une représentation schématique d'un dispositif de transmission selon l'invention permettant de bloquer l'arbre de roues par l'intermédiaire de l'ensemble mécanique ;
- figure 2 : une représentation schématique détaillée du dispositif de transmission de la figure 1 ;
- figure 3a-3c : des exemples de réalisation de frein de parking selon l'invention à partir du dispositif de transmission selon l'invention ;
- figure 4 : une vue en perspective du dispositif selon l'invention centrée sur l'arbre d'une des machines.

Sur les figures, les éléments identiques possèdent la même référence.

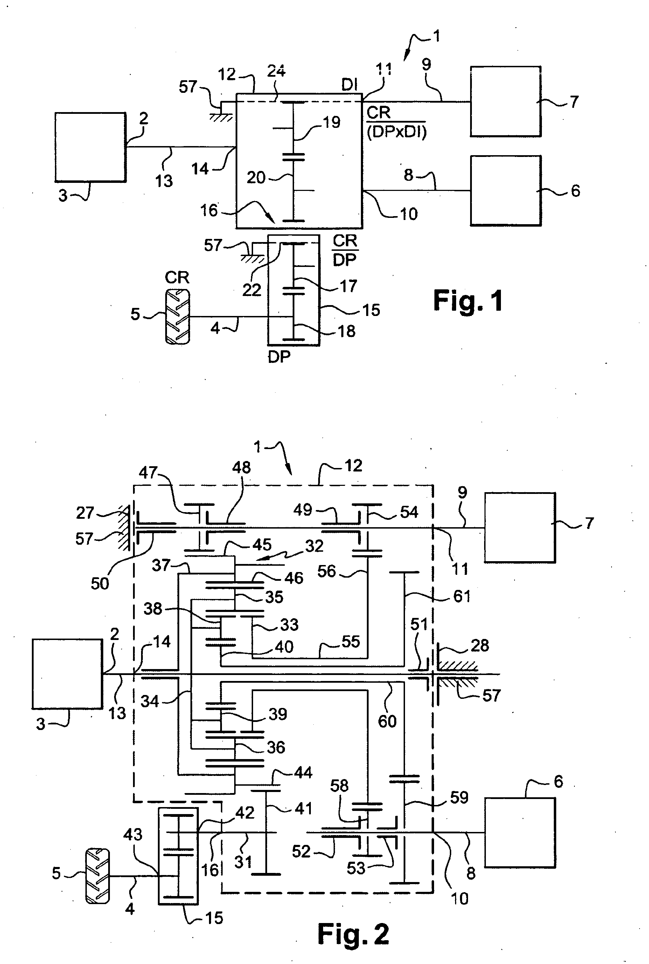

La figure 1 montre une représentation schématique d'un dispositif 1 de transmission selon l'invention entre une sortie 2 d'un moteur 3 thermique et un arbre 4 de roues 5.

Ce dispositif 1 comporte une première machine 6 électrique et une deuxième machine 7 électrique. Ces machines 6 et 7 comportent respectivement un arbre 8 et un arbre 9. Ces arbres 8 et 9 sont respectivement reliés à une entrée 10 et 11 d'entraînement d'un ensemble 12 mécanique. Ce dispositif 1 comporte également un arbre 13 d'entrée relié à la sortie 2 du moteur 3 thermique et à une entrée 14 d'entraînement de l'ensemble 12 mécanique. L'arbre 4 est relié par l'intermédiaire d'un pont 15 à une sortie 16 d'entraînement de l'ensemble 12.

Le pont 15 est par exemple formé de roues 17 et 18. Le pont 15 forme en général un réducteur permanent et possède un rapport de démultiplication fixe égal à DP.

L'ensemble 12 mécanique est un réducteur dont le rapport de démultiplication est variable. Pour une configuration donnée, cet ensemble 12 mécanique peut être équivalent à un ensemble réducteur formé des roues 19 et 20 possédant un rapport de démultiplication intermédiaire de valeur DI.

Dans l'état de la technique, un arbre 22 est relié en amont du pont 15 à l'ensemble 12 mécanique et à ce pont 15. Pour bloquer l'arbre 4 de roues 5 dans une position de frein de parking, on relie cet arbre 22 à un élément 57 immobile qui est en général un bâti du dispositif 1. On note CR le couple observable sur l'arbre 4 de roues 5. Le couple de frein CF observable sur l'arbre 22 est égal au couple observable sur les roues réduit du rapport DP, soit CF=CR/DP.

Dans l'invention, on bloque un arbre 24 relié à l'arbre 4 de roues 5 et à l'ensemble 12 mécanique. Plus précisément, on relie cet arbre 24 à l'élément immobile 57. Autrement dit, dans l'invention, pour réaliser un frein de parking, on bloque l'arbre 4 de roues 5 par l'intermédiaire de l'ensemble mécanique, au niveau d'un arbre d'un des organes 3, 6 ou 7 du système. On réduit alors le couple de frein CF' observable sur l'arbre de roues du rapport DP et du rapport de transmission intermédiaire DI. En effet, le couple CF' vaut CR /(DI *DP). Il est ainsi plus facile de relier l'arbre 24 à un élément fixe que de relier l'arbre 22 à un élément fixe, car le couple observable sur l'arbre 24 est divisé par DI par rapport au couple observable sur l'arbre 22.

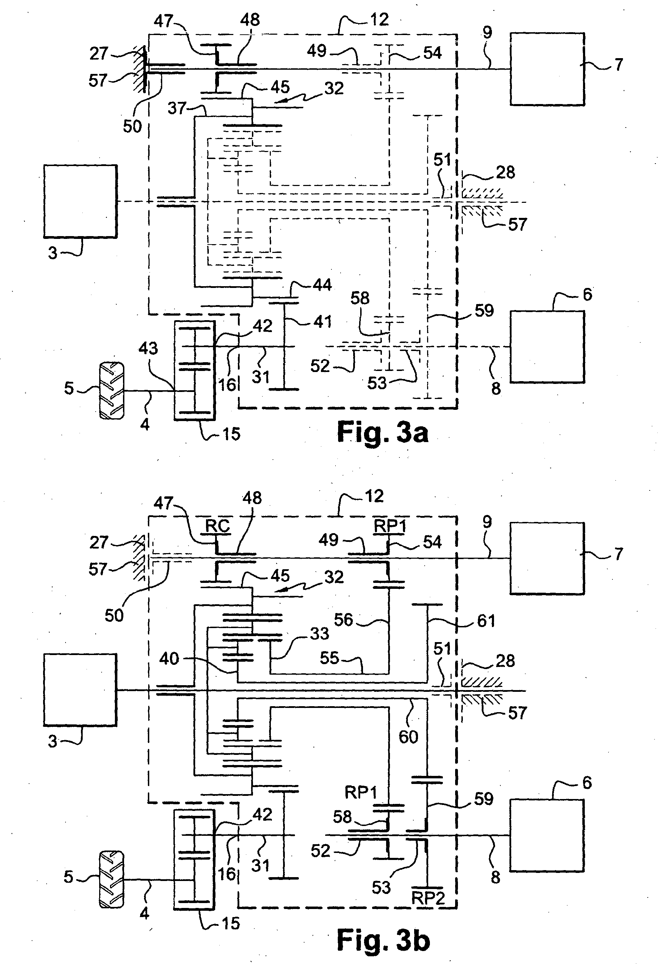

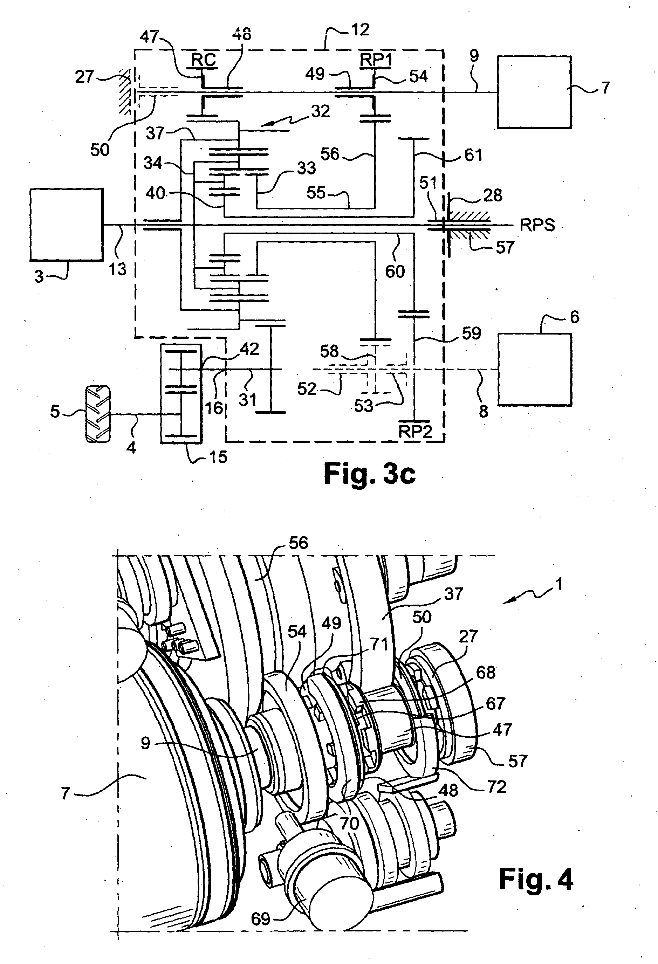

Dans une réalisation particulière exposée plus en détail figure 3a, l'arbre 24 est confondu avec l'arbre 9 de la deuxième machine 7. Dans les autres modes de réalisation (voir figures 3b et 3c), on ne bloque pas directement un arbre relié à l'arbre de roues mais tous les degrés de liberté de l'ensemble 12.

La figure 2 montre une représentation schématique plus détaillée du dispositif 1 de transmission selon l'invention.

Les arbres 8 et 9 des machines 6 et 7 sont toujours respectivement reliés aux entrées 10 et 11 d'entraînement de l'ensemble 12 mécanique délimité par une ligne fermée discontinue. L'arbre 13 d'entrée est relié à la sortie 2 du moteur 3 thermique et à l'entrée 14 d'entraînement de l'ensemble 12. Le dispositif 1 comporte également un arbre 31 de sortie relié à la fois à l'arbre 4 de roues 5 et à la sortie 16 d'entraînement de l'ensemble 12.

Plus précisément, l'ensemble 12 mécanique comporte un train 32 dit de type Ravigneaux. Ce train 32 présente quatre éléments de liaison mécaniques : un pour l'arbre 13 d'entrée, un autre pour l'arbre 31 de sortie et les deux autres pour les arbres 8 et 9 des machines 6 et 7. Comme un train épicycloïdal classique, ce train 32 comporte un premier planétaire 33, un porte-satellites 34 portant des premiers satellites 35 et 36, et une couronne 37 qui engrènent mutuellement. En outre, le train 32 comporte des deuxièmes satellites 38 et 39, et un deuxième planétaire 40. Les deuxièmes satellites 38 et 39 sont portés par le porte-satellites 34 commun et engrènent à la fois avec les satellites 35 et 36, et avec le deuxième planétaire 40.

On peut ainsi faire l'analogie du train 32 avec deux trains épicycloïdaux simples : un premier train comporte le premier planétaire 33, les premiers satellites 35 et 36 et la couronne 37. Un deuxième train comporte le deuxième planétaire 40, les deuxièmes satellites 35 et 39, et est dépourvu de couronne. Ces deux trains sont reliés entre eux de manière à présenter deux degrés de liberté. En effet, le fait que les premiers 35, 36 et les deuxièmes 38, 39 satellites engrènent entre eux supprime un premier degré de liberté sur les quatre théoriquement disponibles des deux trains. Et le fait que les portes-satellites des deux trains soient confondus permet de supprimer un deuxième degré de liberté. En variante, pour présenter deux degrés de liberté les trains sont reliés de manière différente.

Dans cette réalisation, l'arbre 13 d'entrée est relié à la fois à la sortie 2 du moteur 3 thermique et au porte-satellites 34 commun. L'arbre 4 de roues 5 est relié à la couronne 37 par l'intermédiaire du pont 15, de l'arbre 31 de sortie et d'une roue 41. Plus précisément, la roue 41 accrochée à une extrémité de l'arbre 31 de sortie engrène avec la couronne 37. Cet arbre 31 est relié à une entrée 42 du pont 15. Et l'arbre 4 de roues 5 est relié à une sortie 43 du pont 15.

La couronne 37 supporte deux dentures extérieures 44 et 45, et une denture intérieure 46. La roue 41 engrène, on l'a vu, avec la denture extérieure 44. Les premiers satellites 35 et 36 engrènent avec la denture intérieure 46. Et comme on le verra ci-après, un pignon 47 engrène avec la denture extérieure 45.

Le dispositif 1 comporte en outre six crabots 48-53 distincts susceptibles de relier l'arbre sur lequel ils sont montés à un pignon leur correspondant. Ce pignon est soit relié à un des éléments du train 32, soit un élément immobile. Cet élément immobile est en général le bâti 57 de l'ensemble 12. A cet effet, ces crabots 48-53 sont entraînés en rotation par l'arbre sur lequel ils sont montés, et sont susceptibles de se déplacer le long de cet arbre. Lorsqu'un pignon n'entre pas en coopération avec un crabot, il est monté fou sur son arbre.

Plus précisément, le crabot 48 est susceptible de relier l'arbre 9 au pignon 47 qui engrène avec la couronne 45. Le crabot 49 est susceptible de relier l'arbre 9 à un pignon 54 qui est relié au premier planétaire 33 par l'intermédiaire d'un arbre creux 55 et d'une roue 56. Le crabot 50 est susceptible de relier l'arbre 9 à un pignon 27 qui est le bâti de l'ensemble 12. Le crabot 51 est susceptible de relier l'arbre 13 d'entrée au pignon 28 relié au bâti 57. Le crabot 52 est susceptible de relier l'arbre 8 à un pignon 58 qui est relié au premier planétaire 33 par l'intermédiaire de l'arbre creux 55 et de la roue 56. Le crabot 53 est susceptible de relier l'arbre 8 à un pignon 59 qui est relié au deuxième planétaire 40 par l'intermédiaire d'un arbre creux 60 et d'une roue 61.

Les crabots 48 et 49 permettent de faire fonctionner le dispositif 1 dans deux modes de fonctionnement différents. Plus précisément, dans un premier mode de fonctionnement mis en oeuvre pour des rapports de vitesse relativement courts, l'arbre 9 est relié à l'arbre 4 de roues 5. A cette fin, le crabot 48 et le crabot 53 sont engagés respectivement dans les pignons 47 et 59, tandis que tous les autres crabots 49-52 sont désengagés des pignons leur correspondant. Ce premier mode est mis en oeuvre lors d'un décollage du véhicule hybride ou lors d'une marche arrière.

Puis, dès que l'arbre 4 de roues 5 possède une vitesse de rotation supérieure à celle du planétaire 33 (à des rapports de démultiplication près), le dispositif 1 passe au deuxième mode de fonctionnement. Dans ce deuxième mode de fonctionnement, l'arbre 9 de la deuxième machine est relié au planétaire 33. A cet effet, le crabot 49 et le crabot 53 sont respectivement engagés dans les pignons 54 et 59, tandis que tous les autres crabots 48, 50-52 sont désengagés des pignons leur correspondant. Ce deuxième mode est mis en oeuvre pour des rapports de vitesse plus longs que ceux du premier mode. En limitant la vitesse de rotation de la deuxième machine 7, ce deuxième mode permet de limiter une puissance dérivée dans la chaîne électrique (non représentée) reliant les deux machines 6 et 7 entre elles.

En général, lorsque le dispositif 1 est dans une phase de traction (le moteur fournit de la puissance aux roues) ou de récupération (les roues entraînent le moteur), la première machine 6 fonctionne en générateur (respectivement en moteur), tandis que la deuxième machine 7 fonctionne en moteur (respectivement générateur). Dans le cas où une batterie serait reliée au bus électrique (non représenté) reliant les machines, ces machines 6 et 7 pourraient en outre fonctionner simultanément en moteur ou en générateur, par exemple dans un mode tout électrique. Le moteur 3 thermique peut alors être arrêté et l'arbre 13 d'entrée qui lui est relié peut alors être immobilisé à l'aide du crabot 51. A cette fin, on engage le crabot 51 dans le pignon 28.

En variante, l'ensemble 10 est formé par des trains reliés 10 différemment. En variante, les arbres 8 et 9, l'arbre 10 d'entrée et l'arbre 14 de sortie sont reliés à des éléments différents du train 32. En variante, le dispositif 1 de transmission ne comporte qu'une seule machine électrique.

La figure 3a montre un premier exemple de réalisation d'un frein de parking à l'aide des crabots 48-53 du dispositif 1 de transmission.

Dans cette première réalisation de frein de parking, on relie l'arbre 9 de la deuxième machine 7 à un élément de l'ensemble 12 mécanique qui est relié directement à l'arbre 4 de roues 5. Et on immobilise cet arbre 9. Plus précisément, le crabot 48 est engagé à l'intérieur du pignon 47 pour relier l'arbre 9 à l'arbre 4 de roues 5 par l'intermédiaire de la roue 47, de la couronne 37, de la roue 41, de l'arbre 31 de sortie et du pont 15. Le crabot 50 est engagé dans le pignon 27 immobile. Ainsi, en immobilisant la couronne 37, on immobilise l'arbre 31 de sortie et l'arbre 4 de roues 5.

Les autres éléments de l'ensemble mécanique sont représentés en trait discontinu car ils ne participent pas au blocage de l'arbre 4 de roues 5.

La position des autres crabots 50-53 est indifférente. Toutefois de préférence, le crabot 53 est engagé dans le pignon 59. De cette manière, dès que le véhicule décolle, le crabot 50 peut se désengager de l'élément 57 et le dispositif 1 peut alors fonctionner dans le premier mode.

Le rapport de démultiplication entre les roues 4 et l'arbre 9 est globalement égal au rapport de démultiplication du pont 15 multiplié par le rapport de démultiplication entre la roue 41 et le pignon 47. En effet, la couronne 37 qui est à la fois menante et menée n'intervient pas dans le rapport de démultiplication global.

Cette première réalisation est facile à mettre en oeuvre car seul le crabot 50 est à intégrer. En effet, le crabot 48 existe déjà et est utilisé pour faire fonctionner le dispositif 1 dans les différents modes.

La figure 3b montre un deuxième exemple de réalisation d'un frein de parking. Dans cette réalisation, on supprime les deux degrés de liberté du train en reliant des éléments de ce train entre eux.

Plus précisément, ici, on relie la couronne 45 au premier planétaire 33 par l'intermédiaire de l'arbre 9. A cette fin, on engage le crabot 48 dans le pignon 47 et on engage le crabot 49 dans le pignon 54. La couronne 37 est alors reliée à l'arbre 9 par l'intermédiaire du pignon 47. Le planétaire 33 est alors relié à l'arbre 9 par l'intermédiaire de l'arbre 55 et de la roue 56. On impose ainsi une relation de proportionnalité entre le régime du premier planétaire 33 et de la couronne 37, soit RP1 = K.RC.

RP1 est le régime du premier planétaire 33. RC est le régime de la couronne 37 et K est une constante. On supprime ainsi un premier degré de liberté du train 32.

D'autre part, on relie le premier planétaire 33 au deuxième planétaire 40 par l'intermédiaire de l'arbre 8. A cette fin, on engage le crabot 52 dans le pignon 58 et on engage le crabot 53 dans le pignon 59. Le premier planétaire 33 est alors relié à l'arbre 8 par l'intermédiaire de l'arbre 55 et de la roue 56. Le deuxième planétaire 40 est alors relié à l'arbre 8 par l'intermédiaire de l'arbre 60 et de la roue 61. On impose ainsi une deuxième relation de proportionnalité entre les régimes du premier 33 et deuxième 40 planétaire, soit RP1 = K'.RP2. Le régime du deuxième planétaire est RP2, et K' est une constante. On supprime donc un deuxième degré de liberté du train 32.

En supprimant ainsi deux degrés de liberté du train 32 sur les deux dont il dispose, on immobilise tous ses éléments. L'équation caractéristique du train 32 met en évidence que les régimes des éléments de ce train sont nuls si on introduit deux conditions supplémentaires sur les régimes (voir équation (4)). En immobilisant ce train 32, on immobilise l'arbre 4 de roues 5 qui lui est relié par l'intermédiaire du pont 15. Et on obtient donc bien la position de frein de parking désirée.

Les crabots 50 et 51 sont représentés en trait discontinu car ils ne participent pas a priori au blocage des roues 5. Leur position est donc indifférente pour la mise en oeuvre de ce frein de parking.

Plus généralement, pour réaliser un frein de parking selon l'invention, on réalise deux liaisons différentes à l'intérieur du train 32 pour supprimer les deux degrés de liberté de ce train 32.

La figure 3c montre une troisième mise en oeuvre d'un frein de parking selon l'invention. Dans cette mise en oeuvre, on supprime les deux degrés de l'ensemble 12 mécanique en reliant deux éléments du train 32 entre eux et en immobilisant un troisième.

Plus précisément, ici, on relie la couronne 37 et le premier planétaire 33 entre eux par l'intermédiaire de l'arbre 9, comme précédemment. A cette fin, on engage les crabots 48 et 49 respectivement dans les pignons 47 et 54. La couronne 37 est alors reliée à l'arbre 9 par l'intermédiaire du pignon 47. Le planétaire 33 est alors relié à l'arbre 9 par l'intermédiaire de l'arbre 55 et de la roue 56. On supprime ainsi un premier degré de liberté en imposant une proportionnalité entre le régime de la couronne 37 et le régime du premier planétaire 33, soit encore RP1 =K.RC.

D'autre part, on relie au bâti 57 l'arbre 13 qui est relié au porte-satellites 34. A cette fin, on engage le crabot 51 dans le pignon 28 relié au bâti 57. En immobilisant le porte-satellites commun 34, on a RPS= 0. On supprime ainsi un deuxième degré de liberté.

En supprimant les deux degrés de liberté du train 32, on bloque en rotation tous les éléments de ce train 32 et tous les éléments qui lui sont reliés. En conséquence, on bloque l'arbre 4 de roues 5 qui est relié au train 32 par l'intermédiaire notamment du pont 15 et de l'arbre 31. Et on obtient là encore la position de frein de parking recherchée.

Les autres crabots 50, 52 et 53 représentés en trait discontinu ne participent pas à priori au blocage. Leur position est donc indifférente.

En variante, pour supprimer deux degrés de liberté de l'ensemble 12, il serait possible d'immobiliser deux éléments du train 32, en engageant par exemple les crabots 52 et 53 et en reliant l'arbre 8 à un élément immobile.

La figure 4 montre une représentation dans l'espace du dispositif selon l'invention qui est centrée sur l'arbre 9 de la deuxième machine 7.

Cette figure met bien en évidence que la couronne 37 engrène avec le pignon 47. Par ailleurs, le pignon 27 monté en bout d'arbre est accroché au bâti 57. Le pignon 54 engrène avec la roue 56.

Comme on l'a vu, le crabot 49 est susceptible d'entrer en coopération avec le pignon 54. Le crabot 48 est susceptible d'entrer en coopération avec le pignon 47. Et le crabot 50 est susceptible d'entrer en coopération avec le pignon fixe 27.

A cet effet, chaque crabot 48-50 comporte des dents 67 qui sont susceptibles d'entrer en coopération avec des saillies 68 des pignons. Plus précisément, lorsqu'un crabot est déplacé le long de l'arbre 9, en direction du pignon lui correspondant, les dents 67 pénètrent dans l'espace séparant deux saillies 68 successives. Une face de chaque dent se plaque alors sur une face de chaque saillie des pignons. Le crabot peut ainsi entraîner en rotation le pignon qui lui correspond.

En général, les crabots 48-50 sont déplacés en translation par l'intermédiaire de fourchettes 70-72 qui sont elles-mêmes déplacées à l'aide d'un moteur 69 à courant continu. Ce moteur est commandé par un microcontrôleur qui détecte le moment où, en fonction des régimes des différents organes du dispositif 1 notamment, la position de frein de parking devra être enclenchée.

Ainsi, pour réaliser le frein de parking décrit dans la figure 3a, on fait entrer en coopération le crabot 48 avec le pignon 47 et on fait entrer en coopération le crabot 50 avec le pignon 27.

Pour lier la couronne 37 au premier planétaire 33, comme c'est le cas pour les freins de parking des figures 3b et 3c, on fait entrer en coopération le crabot 49 avec le pignon 54 et le crabot 48 avec le pignon 47.

**Revendications**

1. Procédé de blocage de roues d'un véhicule à l'arrêt dans lequel :

   - on met en oeuvre un dispositif (1) de transmission de puissance entre une sortie (2) d'un moteur (3) thermique et un arbre (4) de roues (5), ce dispositif (1) comportant :
   - un arbre (13) d'entrée relié à la sortie (2) du moteur (3) thermique, et un arbre (31) de sortie relié à l'arbre (4) de roues (5),
   - au moins une machine (6, 7) électrique comportant un arbre (8, 9), et
   - un ensemble (12) mécanique reliant entre eux l'arbre (13) d'entrée, l'arbre (31) de sortie et l'arbre (8, 9) de la machine, cet ensemble (12) mécanique étant relié à un pont (15), lui-même relié à l'arbre (4) de roues (5), ledit ensemble mécanique (12) comportant un ensemble de crabots (48-53) distincts aptes à être actionnés pour relier l'arbre sur lequel ils sont montés à un pignon leur correspondant, ledit pignon étant relié soit à un des éléments de l'ensemble (12) mécanique soit à un élément immobile (57),
   et dans lequel, on bloque l'arbre (4) de roues (5) par l'intermédiaire de l'ensemble (12) mécanique en ne faisant intervenir que les crabots de l'ensemble de crabots (48-53).

2. Procédé selon la revendication 1, **caractérisé en ce que** l'ensemble (12) mécanique est formé par deux trains épicycloïdaux, ces deux trains épicycloïdaux comportant chacun plusieurs éléments (33-40) qui engrènent mutuellement, dont un planétaire, des satellites reliés à un porte-satellites et une couronne.

3. Procédé selon la revendication 2, **caractérisé en ce que :**

   - on immobilise un dernier des éléments (37) de l'ensemble (12), celui qui est relié directement au pont (15).

4. Procédé selon la revendication 3, **caractérisé en ce que :**

   - on relie ce dernier élément (37) à immobiliser à l'arbre (9) de la machine (7), et
   - on relie cet arbre (9) à un bâti (57) fixe de l'ensemble (12).

**5.** Procédé selon l'une des revendications 2 à 4, **caractérisé en ce que :**

- on organise les liaisons entre les éléments de l'ensemble (12) mécanique, de manière que cet ensemble (12) ne présente que deux degrés de liberté, un degré de liberté étant une aptitude de l'ensemble (12) mécanique dans laquelle les régimes des éléments (33-40) de l'ensemble (12) ne sont pas dépendants les uns des autres, et
- on supprime ces deux degrés de liberté à l'intérieur de l'ensemble (12) mécanique.

**6.** Procédé selon la revendication 5, **caractérisé en ce que :**

- on relie un premier élément (37) à un deuxième élément (33) pour supprimer un premier degré de liberté, et
- on relie ce deuxième élément (33) à un troisième élément (40) pour supprimer un deuxième degré de liberté.

**7.** Procédé selon la revendication 6, **caractérisé en ce que :**

- on met en oeuvre un dispositif (1) de transmission comportant deux machines (6, 7) électriques, et
- on relie le premier élément (37) à l'arbre (9) d'une des machines (7) et le troisième élément (40) à l'arbre (8) de l'autre machine (8), et
- on relie le deuxième élément (33) aux arbres (8, 9) des deux machines (6, 7).

**8.** Procédé selon la revendication 5, **caractérisé en ce que :**

- on immobilise un des éléments (34) pour supprimer un premier degré de liberté, et
- on relie entre eux deux autres éléments (33, 37) entre eux pour supprimer un deuxième degré de liberté.

**9.** Procédé selon la revendication 8, **caractérisé en ce que** :

- on relie un des éléments (34) à un bâti (57) fixe du dispositif (1) et
- on relie deux autres éléments (33, 37) à l'arbre (9) de la machine (7).

**Claims**

**1.** Method for blocking the wheels of a stopped vehicle in which:

- a power transmission device (1) is implemented between an outlet (2) of a heat engine (3) and a shaft (4) of wheels (5), this device (1) comprising:
- an inlet shaft (13) connected to the outlet (2) of the heat engine (3), and an outlet shaft (31) connected to the shaft (4) of wheels (5),
- at least one electrical machine (6, 7) comprising a shaft (8, 9) and
- a mechanical assembly (12) connecting the inlet shaft (13), the outlet shaft (31) and the shaft (8, 9) of the machine with one another, this mechanical assembly (12) being connected to a bridge (15), which is itself connected to the shaft (4) of wheels (5), the said mechanical assembly (12) comprising an assembly of separate dog clutches (48-53) suited to be actuated to connect the shaft on which they are mounted to a pinion corresponding to them, the said pinion being connected either to one of the elements of the mechanical assembly (12) or to a non-moving element (57),

and in which the shaft (4) of wheels (5) is blocked by means of the mechanical assembly (12), only involving the dog clutches of the assembly of dog clutches (48-53).

**2.** Method according to Claim 1, **characterized in that** the mechanical assembly (12) is formed by two planetary gear trains, these two planetary gear trains each having several elements (33-40) that mesh mutually, including a sun gear, planet gears connected to a planet carrier, and a ring gear.

**3.** Method according to Claim 2, **characterized in that**:

- a last of the elements (37) of the assembly (12), which is connected directly to the bridge (15) is immobilized.

**4.** Method according to Claim 3, **characterized in that**:

- this last element (37) to be immobilized is connected to the shaft (9) of the machine (7) and
- this shaft (9) is connected to a fixed base (57) of the assembly (12).

5. Method according to one of Claims 2 to 4, **characterized in that**:

- the connections between the elements of the mechanical assembly (12) are organized so that this assembly (12) has only two degrees of freedom, one degree of freedom being a capability of the mechanical assembly (12)in which the speeds of the elements (33-40) of the assembly (12) are not dependent on one another, and
- these two degrees of freedom are eliminated inside the mechanical assembly (12).

6. Method according to Claim 5, **characterized in that**:

- a first element (37) is connected to a second element (33) to eliminate a first degree of freedom, and
- this second element (33) is connected to a third element (40) to eliminate a second degree of freedom.

7. Method according to Claim 6, **characterized in that**:

- a transmission device (1), comprising two electrical machines (6, 7), is implemented, and
- the first element (37) is connected to the shaft (9) of one of the machines (7) and the third element (40) is connected to the shaft (8) of the other machine (8), and
- the second element (33) is connected to the shafts (8, 9) of the two machines (6, 7).

8. Method according to Claim 5, **characterized in that**:

- one of the elements (34) is immobilized to eliminate a first degree of freedom, and
- two other elements (33, 37) are connected to one another to eliminate a second degree of freedom.

9. Method according to Claim 8, **characterized in that**:

- one of the elements (34) is connected to a fixed base (57) of the device (1) and
- two other elements (33, 37) are connected to the shaft (9) of the machine (7).

**Patentansprüche**

1. Verfahren zum Blockieren von Rädern eines Fahrzeugs beim Stillstand, bei dem:

- man eine Vorrichtung (1) zum Übertragen von Leistung zwischen einem Ausgang (2) eines Verbrennungsmotors (3) und einer Welle (4) von Rädern (5) umsetzt, wobei diese Vorrichtung (1) Folgendes aufweist:
- eine Eingangswelle (13), die mit dem Ausgang (2) des Verbrennungsmotors (3) verbunden ist, und eine Ausgangswelle (31), die mit der Welle (4) von Rädern (5) verbunden ist,
- mindestens eine Elektromaschine (6, 7), die eine Welle (8, 9) aufweist, und
- eine mechanische Einheit (12), die die Eingangswelle (13), die Ausgangswelle (31) und die Welle (8, 9) der Maschine untereinander verbindet, wobei diese mechanische Einheit (12) mit einer Brücke (15) verbunden ist, die selbst mit der Welle (4) von Rädern (5) verbunden ist, wobei die mechanische Einheit (12) eine Einheit getrennte Klauen (48-53) aufweist, die betätigt werden können, um die Welle, auf die sie montiert sind, mit einem Ritzel, das ihnen entspricht, zu verbinden, wobei das Ritzel entweder mit einem der Elemente der mechanischen Einheit (12) oder mit einem unbeweglichen Element (57) verbunden ist,

und bei dem man die Welle (4) von Rädern (5) über die mechanische Einheit (12) blockiert, indem man die Klauen der Einheit Klauen (48-53) eingreifen lässt.

2. Verfahren nach Anspruch 1, **dadurch gekennzeichnet, dass** die mechanische Einheit (12) aus zwei Planetengetriebezügen gebildet ist, wobei diese zwei Planetengetriebezüge jeder mehrere Elemente (33-40) aufweisen, die ineinander eingreifen, davon ein Planetenrad, Ausgleichsräder, die mit einem Planetenradträger verbunden sind, und ein Kranz.

3. Verfahren nach Anspruch 2, **dadurch gekennzeichnet, dass**:

- man ein letztes der Elemente (37) der Einheit (12) stillstellt, nämlich das, dass direkt mit der Brücke (15) verbunden ist.

4. Verfahren nach Anspruch 3, **dadurch gekennzeichnet, dass**:

- man dieses letzte stillzustellende Element (37) mit der Welle (9) der Maschine (7) verbindet, und
- man diese Welle (9) mit einem stationären Rahmen (57) der Einheit (12) verbindet.

5. Verfahren nach einem der Ansprüche 2 bis 4, **dadurch gekennzeichnet, dass** man:

- Verbindungen zwischen den Elementen der mechanischen Einheit (12) derart organisiert, dass diese Einheit (12) nur zwei Freiheitsgrade aufweist, wobei ein Freiheitsgrad eine Fähigkeit der mechanischen Einheit (12) ist, bei der die Drehzahlen der Elemente (33-40) der Einheit (12) nicht voneinander abhängen, und
- diese zwei Freiheitsgrade im Inneren der mechanischen Einheit (12) weglässt.

6. Verfahren nach Anspruch 5, **dadurch gekennzeichnet, dass** man:

- man ein erstes Element (37) mit einem zweiten Element (33) verbindet, um einen ersten Freiheitsgrad wegzulassen, und
- man dieses zweite Element (33) mit einem dritten Element (40) verbindet, um einen zweiten Freiheitsgrad wegzulassen.

7. Verfahren nach Anspruch 6, **dadurch gekennzeichnet, dass** man:

- eine Übertragungsvorrichtung (1) umsetzt, die zwei Elektromaschinen (6, 7) aufweist, und
- man das erste Element (37) mit der Welle (9) einer der Maschinen (7) verbindet, und das dritte Element (40) mit der Welle (8) der anderen Maschine (8) und
- man das zweite Element (33) mit den Wellen (8, 9) der zwei Maschinen (6, 7) verbindet.

8. Verfahren nach Anspruch 5, **dadurch gekennzeichnet, dass**:

- man eines der Elemente (34) stillstellt, um einen ersten Freiheitsgrad wegzulassen, und
- man zwei weitere Elemente (33, 37) miteinander verbindet, um einen zweiten Freiheitsgrad wegzulassen.

9. Verfahren nach Anspruch 8, **dadurch gekennzeichnet, dass**:

- man eines der Elemente (34) mit einem stationären Rahmen (57) der Vorrichtung (1) verbindet und
- man zwei weitere Elemente (33, 37) mit der Welle (9) der Maschine (7) verbindet.

**Fig. 1**

**Fig. 2**

**Fig. 3a**

**Fig. 3b**

**Fig. 3c**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2832357 A
- EP 1164043 A

- EP 1281557 A